# EUROPÄISCHE PATENTANMELDUNG

(11) **EP 4 610 768 A1**
(43) Veröffentlichungstag der Anmeldung: **03.09.2025**
(21) Anmeldenummer: 25158945.3
(22) Anmeldetag: 19.02.2025
(51) Int. Cl.: G06F 1/14, G06F 21/72, G07F 17/32

(54) **SYSTEMEINHEIT UND VERFAHREN EINES DATENBANKMODULS EINES UNTERHALTUNGSAUTOMATEN ZUM SCHUTZ VOR MANIPULATION DER SYSTEMZEIT**

(30) Priorität: 28.02.2024 DE 102024105683
(71) Anmelder: adp Merkur GmbH, 32339 Espelkamp (DE)
(72) Erfinder:
(74) Vertreter: Puschmann Borchert Kaiser Klettner Patentanwälte Partnerschaft mbB

(57) **Zusammenfassung**

Die Erfindung betrifft eine Systemeinheit (10) eines Datenbankmoduls eines Unterhaltungsautomaten zum Schutz vor Manipulation der Systemzeit, umfassend einen Microprocessor Chip (MPU) (12), einen Microcontroller (14) mit einem Uhrzeit-Baustein (14a), und einen RTC-Baustein (16), der einen ersten Uhrzeitwert generiert. Der Microprocessor Chip (12) ist über einen über eine erste Datenbus-Schnittstelle (18) mit dem RTC-Baustein (16) verbunden. Der Microprocessor Chip (12) ist über eine zweite Datenbus-Schnittstelle (20) mit dem Microcontroller (14) verbunden. Der Microcontroller (14) generiert einen zweiten Uhrzeitwert. Der RTC-Baustein (16) und der Uhrzeit-Baustein (14a) weisen einen Takt von einem 1 Hz auf. Der Takt des RTC-Bausteins (16) ist mit dem Takt des Uhrzeit-Bausteins (14a) gekoppelt. Die Uhrzeitwerte werden durch den Microprocessor Chip (12) gelesen und zyklisch miteinander verglichen.

## Beschreibung

Die Erfindung betrifft eine Systemeinheit gemäß der im Oberbegriff des Anspruchs 1 angegebenen Art und ein Verfahren gemäß der im Oberbegriff des Anspruchs 9 angegebenen Art.

Unterhaltungsautomaten, z.B. in Spielstätten, Gastronomie aufgestellte geldwertbetätigbare Unterhaltungsautomaten unterliegen einer gesetzlichen Regulierung, welche die Rahmenbedingungen für deren Betrieb und Funktionsweise vorgibt. Festgeschrieben sind diese Regelungen in der Spielverordnung SpielV und/oder in den Ausführungsgesetzen des Glückspielstaatsvertrages. Demnach müssen unter anderem die in den Unterhaltungsautomaten eingebauten Datenbankmodule vor Manipulation der Komponenten geschützt werden. Hierfür wird in bekannter Art und Weise zumeist eine Sensorik mit sehr kostspieligen, aufwendig zu produzierenden Mäanderplatinen verwendet. Diese werden hauptsächlich verwendet, um die Systemzeit bzw. *Real-time clock (RTC)* vor Manipulationen zu schützen.

Es ist daher die Aufgabe der Erfindung ein zuverlässiges, kostengünstiges und einfach zu fertigende Systemeinheit bereitzustellen, die vor Manipulationen der Systemzeit von Datenbankmodulen in Unterhaltungsautomaten schützt und diese erkennt.

Diese Aufgabe wird durch die Merkmale des Patentanspruches 1 gelöst.

Die Unteransprüche stellen vorteilhafte Weiterbildungen dar.

Nach der Erfindung umfasst eine Systemeinheit eines Datenbankmoduls eines Unterhaltungsautomaten zum Schutz vor Manipulation der Systemzeit, einen Microprocessor Chip (MPU), einem Microcontroller mit einem Uhrzeit-Baustein und einen RTC-Baustein, der einen ersten Uhrzeitwert generiert. Der Microprocessor Chip ist über eine erste Datenbus-Schnittstelle mit dem RTC-Baustein verbunden. Der Microprocessor Chip ist über eine zweite Datenbus-Schnittstelle mit dem Microcontroller verbunden. Der Microcontroller generiert einen zweiten Uhrzeitwert. Der RTC-Baustein und der Uhrzeit-Baustein weisen einen Takt von einem 1 Hz auf. Der Takt des RTC-Bausteins ist mit dem Takt des Uhrzeit-Bausteins gekoppelt. Die Uhrzeitwerte werden durch den Microprocessor Chip gelesen und zyklisch miteinander verglichen.

Vorzugsweise wird als Microprocessor Chip ein SAMA5D28 verwendet.

Gemäß einer weiteren vorteilhaften Ausführungsform der Erfindung ist der Microcontroller als AVR-Sensor-Controller ausgebildet. Hierdurch ist ein einfach aufgebauter und leicht programmierbarer Microcontroller bereitgestellt.

Bevorzugt wird der Microcontroller über eine Batteriespannung versorgt. Durch diese Ausbildung kann der Microcontroller im Falle der Abschaltung einer Betriebsspannung weiterhin zuverlässig versorgt werden.

Vorzugsweise ist die erste Datenbus-Schnittstelle als I2C-Schnittstelle und die zweite Datenbus-Schnittstelle als SPI-Schnittstelle ausgebildet. Durch die Ausbildung der I2C-Schnittstelle ist eine einfach aufgebaute und platzsparende Datenbus-Schnittstelle realisiert. Hierdurch können Material- und Testkosten eingespart werden. Durch die SPI-Schnittstelle ist eine vollduplexfähige Schnittstelle realisiert, sodass Daten vom Microprocessor Chip zum Microcontroller und vice versa gleichzeitig übertragen werden können.

Gemäß einer weiteren vorteilhaften Ausführungsform der Erfindung wird der zweite Uhrzeitwert verschlüsselt, insbesondere durch eine 128bit AES-Verschlüsselung, vom Microcontroller zum Microprocessor Chip übertragen. Der Microprocessor Chip entschlüsselt die Verschlüsselung durch einen Key, insbesondere einen 128bit AES-Key. Es handelt sich bei dem 128bit AES-Key um einen zufällig erzeugten Key, der bei der Initialisierung einmalig übertragen wird.

Bevorzugt ist der Key in einer Secure Backup RAM gespeichert.

Vorzugsweise weist der Microcontroller einen Watchdogtimer-Baustein auf. Der Watchdogtimer-Baustein überwacht den Takt des RTC-Bausteins mittels eines Watchdogtimers. Der Takt des Watchdogtimers lässt sich von außen nicht beeinflussen, so dass dieser nicht manipuliert werden kann.

Gemäß einer weiteren vorteilhaften Ausführungsform der Erfindung ist ein Metallgehäuse vorgesehen. Das Metallgehäuse umschließt die Systemeinheit so, dass die Systemeinheit vor äußeren Einflüssen geschützt ist. Hierdurch können physische Manipulationen an Komponenten verhindert werden.

Ein weiterer Aspekt der Erfindung betrifft ein Verfahren zum Schutz vor Manipulation der Systemzeit eines Datenbankmoduls eines Unterhaltungsautomaten mit einer Systemeinheit, umfassend einen Microprocessor Chip (MPU), einem Microcontroller mit einem Uhrzeit-Baustein und einen RTC-Baustein, der einen ersten Uhrzeitwert generiert. Der Microprocessor Chip ist über eine erste Datenbus-Schnittstelle mit dem RTC-Baustein verbunden. Der Microprocessor Chip ist über eine zweite Datenbus-Schnittstelle mit dem Microcontroller verbunden. Der Microcontroller generiert einen zweiten Uhrzeitwert. Der RTC-Baustein und der Uhrzeit-Baustein weisen einen Takt von einem 1 Hz auf. Der Takt des RTC-Bausteins ist mit dem Takt des Uhrzeit-Bausteins gekoppelt. Die Uhrzeitwerte werden durch den Microprocessor Chip gelesen und zyklisch miteinander verglichen. Das Verfahren umfasst zumindest folgende Verfahrensschritte:
- Bereitstellung eines initialen ersten Uhrzeitwerts vom Microprocessor Chip;
- Übertragung des initialen ersten Uhrzeitwerts vom Mircoprocessor Chip an RTC-Baustein;
- Übertragung des initialen ersten Uhrzeitwerts und zufällig generierten 128bit AES-Key vom Microprocessor Chip an den Microcontroller;
- Konfiguration des RTC-Bausteins auf 1 Hz Ausgangstakt;
- Überwachung des Takts des RTC-Bausteins durch einen Watchdogtimer-Baustein des Microcontrollers;
- Übertragung der beiden Uhrzeitwerte an den Microprocessor Chip, und
- Vergleich der beiden Uhrzeitwerte durch den Microprocessor Chip.

Gemäß einer weiteren vorteilhaften Ausführungsform der Erfindung ist das System wie oben beschrieben ausgebildet.

Bevorzugt sind folgende weitere Verfahrensschritte vorgesehen:
- Verschlüsselung des zweiten Uhrzeitwerts;
- Übertragung des zweiten Uhrzeitwerts vom Uhrzeit-Baustein zum Microprocessor Chip, und
- Entschlüsselung des zweiten Uhrzeitwerts durch Microprocessor Chip.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:

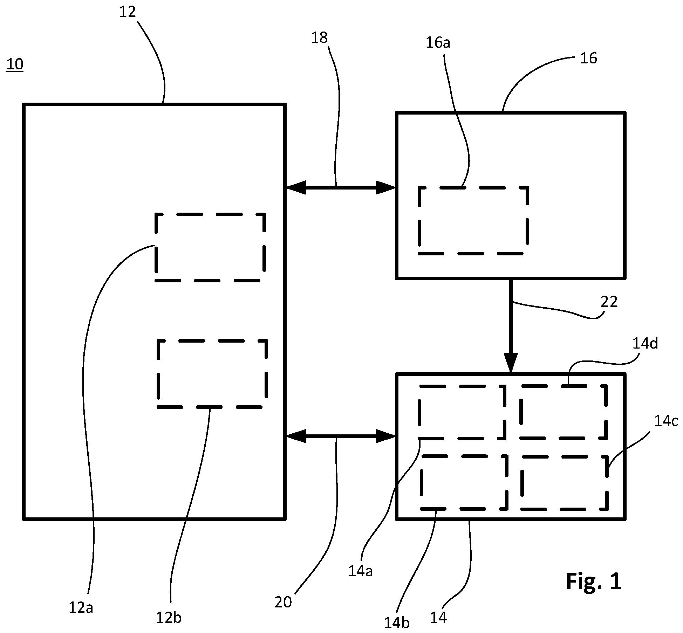

- Fig. 1: eine schematische Ansicht des Aufbaus der Systemeinheit.

In der Fig. 1 ist eine schematische Ansicht des Aufbaus einer Systemeinheit 10 dargestellt. Die Systemeinheit 10 weist einen Microprocessor Chip 12, einen Microcontroller 14 und einen RTC-Baustein 16 auf. Der Microprocessor Chip 12 ist über eine erste Datenbus-Schnittstelle 18 mit dem RTC-Baustein 16 verbunden. Der Microprocessor Chip 12 ist weiterhin über eine zweite Datenbus-Schnittstelle 20 mit dem Microcontroller 14 verbunden.

Die erste Datenbus-Schnittstelle 18 ist als I2C-Schnittstelle und die zweite Datenbus-Schnittstelle 20 ist als SPI-Schnittstelle ausgebildet.

Der Microprocessor Chip 12 weist unter anderem einen Secure Backup RAM 12a und ein Betriebssystem 12b. Der Microcontroller 14 weist einen Uhrzeit-Baustein 14a, einen SRAM 14b und ein EEPROM 14c auf.

Als Microprocessor Chip12 wird der Microchip SAMA5D28 verwendet.

Der Microprocessor Chip 12 generiert einen durch einen Zufallsgenerator erzeugten 128bit Key, der während der Produktion auch an den Microcontroller 14 über die zweite Datenbus-Schnittstelle 20 übermittelt wird. Im Microprocessor Chip 12 wird der 128bit Key im Secure Backup RAM 12a gespeichert. Im Microcontroller 14 wird der 128bit Key batteriegestützt im SRAM 14b gespeichert. Alternativ kann der 128bit Key auch nichtflüchtig im EEPROM 14c gespeichert werden.

Bei dem 128bit Key handelt es sich um einen 128bit AES-Key.

Der RTC-Baustein 16 weist eine PPS-Quelle 16a auf. Die PPS-Quelle 16a generiert einen Takt von 1Hz mit dem der RTC-Baustein 16 betrieben wird. Dabei wird ein erster Uhrzeitwert erzeugt, die Systemzeit bzw. *Real Time Clock.* Der Microcontroller 14 wird über eine Schnittstelle 22 mit einem hochpräzisen 1Hz Takt des RTC-Bausteins 16 betrieben und bildet mittels des Uhrzeit-Bausteins 14a einen zweiten Uhrzeitwert.

Der erste und zweite Uhrzeitwert wird nur bei jedem Systemstart gelesen. Im weiteren Betrieb werden die Uhrzeitwerte über die PPS-Quelle 16a präzise kalibriert. Diese Kalibrierung ist nur in einem bestimmten, geringen Toleranzbereich der Frequenz möglich. Zeitsprünge sind hierdurch nicht möglich.

Um Manipulationsversuche durch einen Overdrive während des Betriebs zu erkennen, wird der erste Uhrzeitwert des RTC-Bausteins 16 und der zweite Uhrzeitwert des Microcontrollers 14 zyklisch von dem Microprocessor Chip 12 über die erste und zweite Datenbus-Schnittstelle 18,20 ausgelesen und miteinander verglichen. Sind die Uhrzeitwerte nicht exakt gleich, wird eine Fehlermeldung durch das Betriebssystem 12a des Microprocessor Chips 12 generiert. Zum Ver- und Entschlüsseln des zweiten Uhrzeitwerts wird der 128bit Key verwendet, der sowohl im Microprocessor Chip 12 als auch im Microcontroller 14 gespeichert ist.

Der Microcontroller 14 weist einen Watchdog-Baustein 14c auf. Der Watchdog-Baustein 14c überwacht mittels eines Watchdogtimers den 1Hz Takt des RTC-Bausteins 16. Der Watchdog-Baustein 14c lässt sich von außen nicht beeinflussen.

Sollte der erste Uhrzeitwert des RTC-Bausteins 16 über die erste Datenbus-Schnnittstelle 18 aufgrund eines Manipulationsversuchs verändert werden, müsste auch der zweite Uhrzeitwert des Microcontrollers 14 mittels eines Overdrive des 1Hz Ausgangstakts des RTC-Bausteins 16 mit weniger oder zusätzlichen Takten auf den veränderten ersten Uhrzeitwert des RTC-Bausteins 16 gebracht werden. Da der Takt über den Watchdochtimer des Watchdog-Bausteins 14c überwacht wird, ist dies nur begrenzt möglich. Diese Art der Manipulation wäre zudem nur außerhalb des Betriebs des Microprocessor Chips 12 möglich, da dieser durch eine Funktion des Betriebssystems einen Fehler generieren würde.

Weiterhin wäre es nur durch sehr hohen Aufwand möglich an den im SRAM 14a oder EEPROM 14b im Microcontroller 14 gespeicherten 128bit Key zu gelangen, um damit den korrekten zweiten Uhrzeitwert simulieren zu können.

Zwischen Microcontroller 14 und Microprocessor Chip 12 werden weiterhin über die zweite Datenbus-Schnittstelle 20 Informationen zu Türöffnungen, Batteriespannung und Batteriespannung unverschlüsselt übertragen.

Die Systemeinheit 10 ist durch ein die Systemeinheit 10 komplett umgebendes Metallgehäuse vor äußeren Einflüssen bzw. physischen Manipulationen der Komponenten geschützt.

Durch diesen Aufbau der Systemeinheit 10 ist eine einfache und kostengünstige Möglichkeit ausgebildet die Systemzeit von Datenbankmodulen eines Unterhaltungsautomaten zuverlässig vor Manipulationen der Systemzeit zu schützen und Manipulationen zu erkennen.

### Bezugszeichenliste

- 10: Systemeinheit
- 12: Microprocessor Chip
- 12a: Secure Backup RAM des Microprocessor Chips 12
- 12b: Betriebssystem des Microprocessor Chips 12
- 14: Microcontroller
- 14a: Uhrzeit-Baustein des Microcontrollers 14
- 14b: SRAM des Microcontrollers 14
- 14c: EEPROM des Microcontrollers 14
- 14d: Watchdog-Baustein des Microcontrollers 14
- 16: RTC-Baustein
- 16a: PPS-Quelle des RTC-Bausteins 16
- 18: erste Datenbus-Schnittstelle
- 20: zweite Datenbus-Schnittstelle
- 22: Schnittstelle

## Patentansprüche

1. Systemeinheit (10) eines Datenbankmoduls eines Unterhaltungsautomaten zum Schutz vor Manipulation der Systemzeit, umfassend einen Microprocessor Chip (MPU) (12), einem Microcontroller (14) mit einem Uhrzeit-Baustein (14a), und einen RTC-Baustein (16), der einen ersten Uhrzeitwert generiert, wobei der Microprocessor Chip (12) über einen über eine erste Datenbus-Schnittstelle (18) mit dem RTC-Baustein (16) verbunden ist, wobei der Microprocessor Chip (12) über eine zweite Datenbus-Schnittstelle (20) mit dem Microcontroller (14) verbunden ist, wobei der Microcontroller (14) einen zweiten Uhrzeitwert generiert, wobei der RTC-Baustein (16) und der Uhrzeit-Baustein (14a) einen Takt von einem 1 Hz aufweisen, wobei der Takt des RTC-Bausteins (16) mit dem Takt des Uhrzeit-Bausteins (14a) gekoppelt ist, und wobei die Uhrzeitwerte durch den Microprocessor Chip (12) gelesen und zyklisch miteinander verglichen werden.

2. Systemeinheit nach Anspruch 1, **dadurch gekennzeichnet, dass** der Microcontroller (14) als AVR-Sensor-Controller ausgebildet ist.

3. Systemeinheit nach einem der vorangehenden Ansprüche, **dadurch gekennzeichnet, dass** der Microcontroller (14) über eine Batteriespannung versorgt wird.

4. Systemeinheit nach einem der vorangehenden Ansprüche, **dadurch gekennzeichnet, dass** die erste Datenbus-Schnittstelle (18) als I2C-Schnittstelle und die zweite Datenbus-Schnittstelle (20) als SPI-Schnittstelle ausgebildet ist.

5. Systemeinheit nach einem der vorangehenden Ansprüche, **dadurch gekennzeichnet, dass** der zweite Uhrzeitwert verschlüsselt, insbesondere durch eine 128bit AES-Verschlüsselung, vom Microcontroller (14) zum Microprocessor Chip (12) übertragen wird, wobei der Microprocessor Chip (12) die Verschlüsselung durch einen Key, insbesondere einen 128bit AES-Key, entschlüsselt.

6. Systemeinheit nach Anspruch 5, **dadurch gekennzeichnet, dass** der Key in einer Secure Backup RAM (12a) gespeichert ist.

7. Systemeinheit nach einem der vorangehenden Ansprüche, **dadurch gekennzeichnet, dass** der Microcontroller (14) einen Watchdogtimer-Baustein (14d) aufweist, wobei der Watchdogtimer-Baustein (14d) den Takt des RTC-Bausteins (16) mittels eines Watchdogtimers überwacht.

8. Systemeinheit nach einem der vorangehenden Ansprüche, **dadurch gekennzeichnet, dass** ein Metallgehäuse vorgesehen ist, wobei das Metallgehäuse die Systemeinheit (10) so umschließt, dass die Systemeinheit (10) vor äußeren Einflüssen geschützt ist.

9. Verfahren zum Schutz eines Datenbankmoduls eines Unterhaltungsautomaten vor Manipulation mit einer Systemeinheit (10), umfassend einen Microprocessor Chip (MPU) (12), einem Microcontroller (14) mit einem Uhrzeit-Baustein (14a), und einen RTC-Baustein (16), der einen ersten Uhrzeitwert generiert, wobei der Microprocessor Chip (12) über einen über eine erste Datenbus-Schnittstelle (18) mit dem RTC-Baustein (16) verbunden ist, wobei der Microprocessor Chip (12) über eine zweite Datenbus-Schnittstelle (20) mit dem Microcontroller (14) verbunden ist, wobei der Microcontroller (14) einen zweiten Uhrzeitwert generiert, wobei der RTC-Baustein (16) und der Uhrzeit-Baustein (14a) einen Takt von einem 1 Hz aufweisen, dass der Takt des RTC-Bausteins (16) mit dem Takt des Uhrzeit-Bausteins (14a) gekoppelt ist, wobei die Uhrzeitwerte durch den Microprocessor Chip (12) gelesen und zyklisch miteinander verglichen werden, wobei zumindest folgende Verfahrensschritte umfasst sind:
- Bereitstellung eines initialen ersten Uhrzeitwerts vom Microprocessor Chip (12);
- Übertragung des initialen ersten Uhrzeitwerts vom Mircoprocessor Chip (12) an RTC-Baustein (16);
- Übertragung des initialen ersten Uhrzeitwerts und zufällig generierten 128bit AES-Key vom Microprocessor Chip (12) an den Microcontroller (14);
- Konfiguration des RTC-Bausteins (16) auf 1 Hz Ausgangstakt;
- Überwachung des Takts des RTC-Bausteins (16) durch einen Watchdogtimer-Baustein (14d) des Microcontrollers (14);
- Übertragung der beiden Uhrzeitwerte an den Microprocessor Chip (12), und
- Vergleich der beiden Uhrzeitwerte durch den Microprocessor Chip (12).

10. Verfahren nach Anspruch 9, **dadurch gekennzeichnet, dass** die Systemeinheit (10) nach einem der Ansprüche 1 bis 8 ausgebildet ist.

11. Verfahren nach einem der Ansprüche 9 oder 10, **dadurch gekennzeichnet, durch** weitere Verfahrensschritte:
- Verschlüsselung des zweiten Uhrzeitwerts;
- Übertragung des zweiten Uhrzeitwerts vom Uhrzeit-Baustein (14a) des Microcontrollers (14) zum Microprocessor Chip (12), und
- Entschlüsselung des zweiten Uhrzeitwerts durch Microprocessor Chip (12).
